# EUROPEAN PATENT APPLICATION

(11) **EP 1 115 241 A2**
(43) Date of publication of application: **11.07.2001**
(21) Application number: 00128197.1
(22) Date of filing: 21.12.2000
(51) Int. Cl.: H04M 1/725, H04Q 7/32, H04B 1/38, G01L 7/00

(54) **A portable communication device with means for measuring the altitude**

(30) Priority: 07.01.2000 US 479765
(71) Applicant: MOTOROLA, INC., Schaumburg, IL 60196 (US)
(72) Inventor: Pai, Klaus, 65239 Hohenstein (DE)
(74) Representative: Gibson, Sarah Jane

(57) **Abstract**

A portable communication device (1,2,3) has a base member with a radio receiver (5), a measurement member with a pressure sensor (11) for detecting variations in atmosphere pressure, and means (6,9) for converting the signal produced by the pressure sensor to a corresponding altitude value and means for indicating and transmitting the altitude value.

## Description

### Field of the Invention

This invention relates in general to a portable communication device comprising a base member including a radio receiver. This invention relates in particular to certain operational functions incorporated into such a portable, as described herein.

### Background of the Invention

For a person performing outdoor activities, information about the actual location is sometimes important. For example, a mountain climber needs information about the altitude.

The mountain climber can use an altimeter that has a relative altitude measuring function. The altimeter detects variations in atmosphere pressure by a pressure sensor, then converts the variations of pressure into altitude by using a look up table of pressure/height values representing the reference model of the Standard International Atmosphere or another special atmospheric profile. Variation in atmosphere pressure is the difference between the atmospheric pressure measurement at a reference altitude setting and point of actual measurement.

However, a problem is the very low accuracy of the calculated altitude (relative and absolute altitude) caused by rising or falling atmospheric pressure during weather change. This is very disadvantageous for some applications, e.g., mountain rescue services, mountaineers, mountain guides, geologists, mine workers, forest rangers, mountain bike riders, skiers, or military. The failure in detected altitude can be some hundreds of meters. Furthermore, the frequently required manual calibration (setting of the reference altitude) in order to get an accurate absolute altitude reading is inconvenient and is only possible on locations where the actual altitude is known.

The present invention seeks to provide an improved device that mitigates or avoid these and other disadvantages and limitations of the prior art.

### Brief Description of the Drawings

- FIG. 1: is a view of a system comprising a base station and portables; and
- Fig. 2: is a view of a part of the portable.

### Detailed Description of a Preferred Embodiment

An object of this invention is to provide novel features and improvements to a portable communication device (hereinafter "portable"), for example, a mobile telephone or a radio set. A further object of this invention is to provide information about the relative or absolute altitude of the portable or relative to other portables.

In a preferred embodiment of the invention the portable further comprises means to transmit and receive user specific personality data, air pressure/altitude data and altitude calibration data.

The base member can be a mobile telephone, a radio or a pager. Usually, a portable, especially a mobile telephone, is part of the equipment of a mountain climber. The present invention allows a mountain climber to receive information about the altitude from the portable according to the invention. The total number of devices as part of the climber's equipment is reduced by the invention in a useful manner.

In a preferred embodiment of the invention, the portable further comprises means for receiving reference data and means for calculating the altitude value from a signal produced by the pressure sensor and from the reference data.

For example, a portable at a location with known altitude (base camp, summit, building) can be calibrated. It is then possible to forward this calibration information (remote calibration) to other portables (mountaineers). In another way, base stations are provided in order to send calibration information to the portable. The calibration information can be the "to sea level reduces atmospheric pressure". Based on the "to sea level reduced atmospheric pressure" as reference the altimeter unit of the portable is calibrated automatically in the known way. This is accomplished by shifting the look up table through the altimeters (radios) processor. An accuracy of +/- 1 meter can be achieved.

The "to sea level reduced atmospheric pressure" can also be transmitted as reference via a communication network which could be for example a private system (e.g., system of mountain rescue service), a trunking system (Tetra, MPT1327, IDEN), a data transmission network (e.g., MDD modacom), a paging system (POCSAC, SCALL), a telecom network (GSM) or a public radio or television network (DAB).

Each base station of such a system covering a large area should be supplied with the precision reference barometer in order to take atmospheric pressure variation within this area into account (small cells). Especially, the calibration information is automatically transmitted either periodical, more frequently during weather changes or on request e.g., during the booking-in process to a radio system e.g., GSM. For special applications or extreme weather conditions also a special atmospheric profile can be transmitted to increase the accuracy of the altitude calibration.

In a next embodiment of the invention the portable comprises means for indicating the pressure value. For example, the atmospheric pressure and the "to sea level reduced atmospheric pressure" are displayed and can be used, in the case the portable was calibrated by a reference radio or radio system e.g., GSM, as weather forecast with displayed symbols, e.g., sun / clouds / rain.

In this way, a person like a mountaineer gets further useful information via the portable. Hence, for example, the security during climbing a mountain will be enhanced.

In a further embodiment of the invention the portable comprises means for translating and indicating the altitude value in a number like a number of floors of a building. In this way the portable can indicate the number of floors in a building, e.g., a sky-scraper, a hotel, a hospital or a mine.

In a further embodiment of the invention the portable comprises means for storing, tracking, indicating and transmitting the altitude value. In this way, the user can get a useful information about his movement. This information can be transmitted also to another radio or can be collected by another radio on request. This is very useful in case of an accident (emergency call).

In a further embodiment of the invention the portable comprises means for calculating and indicating a relative altitude value with respect to another portable. A system comprising a lot of such portables is useful for the co-ordination of sport groups, expedition teams, mountain rescue services (especially at bad weather condition).

For this reason, in a further embodiment of the invention the portable comprises means for downloading in real-time the altitude value to a data processor external thereto. The portable further comprises means for receiving the altitude value from a further portable external thereto.

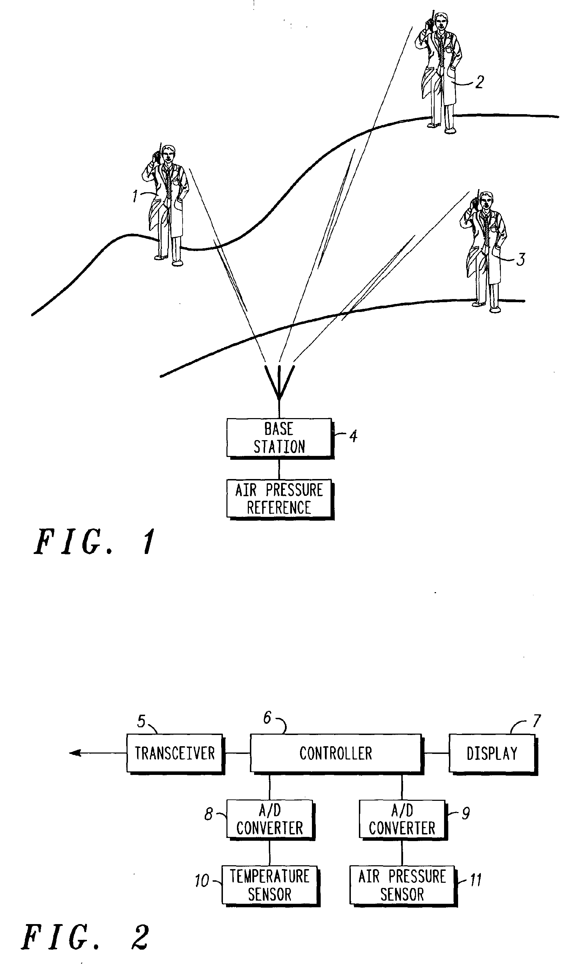

Referring to FIG. 1, three portables 1, 2, 3 belonging to the equipment of mountain climbers are shown. A base station 4 is covering the area, in which the mountain climbers stay.

A base station is at a location with known altitude. Hence, its altimeter can be calibrated. It is then possible to forward this calibration information to the portables 1, 2, 3 (mountaineers). The calibration information is the "to sea level reduces atmospheric pressure". Based on the "to sea level reduced atmospheric pressure" as reference, the altimeter unit of the portable is calibrated automatically in the known way. This is accomplished by shifting a look up table through the altimeters (radios) processor. An accuracy of +/- 1 meter can be achieved. Furthermore, the calibrated altitude with high accuracy can be used to calibrate the altitude reading of GPS (Global Positioning System) receivers and reduce their acquisition time effectively.

Referring to FIG. 2, a portable comprises a transceiver 5, a controller 6, a display 7, two A/D converters 8, 9, a temperature sensor 10 and an air pressure sensor 11.

The transceiver comprises a receiver and a transmitter. The received calibration information together with the digital air pressure signal is processed in the controller in order to calculate the calibrated altitude. The temperature compensated air pressure sensor delivers the analogue air pressure signal that is then converted with an A/D converter to the digital air pressure signal. In the case a cheap non-compensated air pressure sensor is used, a separate temperature sensor delivers the temperature compensation signal.

The receiver and transmitter is used for distribution of user specific personality data, air pressure/ altitude data and altitude calibration data as described above.

While the invention has been described in terms of particular structures and devices, those of skill in the art will understand based on the description herein that it is not limited merely to such examples and that the full scope of the invention is properly determined by the claims that follow.

## Claims

1. A portable radio communication device (1) with a radio receiver, characterised by (a) a pressure sensor (11) for detecting variations in atmosphere pressure; and (b) means (9, 6) for converting the signal produced by the pressure sensor to a corresponding altitude value; and (c) means for indicating the altitude value.

2. The portable radio communication device according to claim 1 being a mobile telephone.

3. The portable radio communication device according to claim 1 being a pager.

4. The portable radio communication device according to claim 1 further characterised by means for receiving reference data and means for calculating the altitude value from the signal produced by the pressure sensor and from the reference data.

5. The portable radio communication device according to claim 1 further comprising a display (7) for indicating the altitude value.

6. The portable radio communication device according to claim 1 further comprising means for translating and indicating the altitude value in a number of floors of a building.

7. The portable radio communication device according to claim 1 further comprising means for receiving and indicating said altitude value from a further portable external thereto.

8. The portable radio communication device according to claim 7 further comprising means for calculating and indicating a relative altitude value between said altitude values of said two portables.
